# EUROPEAN PATENT SPECIFICATION

(11) **EP 3 237 168 B1**
(45) Date of publication and mention of the grant of the patent: **18.12.2019**
(21) Application number: 15822931.0
(22) Date of filing: 21.12.2015
(51) Int. Cl.: B29C 44/44, B29C 33/26, B29C 44/58, B29C 33/22, B29K 25/00

(54) **MODULAR MOULDING STRUCTURE FOR EXPANDING AND SINTERING POLYSTYRENE**
MODULARE FORMSTRUKTUR ZUM EXPANDIEREN UND SINTERN VON POLYSTYROL
STRUCTURE DE MOULAGE MODULAIRE POUR LA DILATATION ET LE FRITTAGE DU POLYSTYRÈNE

(30) Priority: 24.12.2014 IT PS20140019
(43) Date of publication of application: 01.11.2017
(73) Proprietor: AC Engineering S.p.A., 61032 Fano (PU) (IT)
(72) Inventor: CANDIRACCI, Angelo, 61032 Fano (PU) (IT)
(74) Representative: Gustorf, Gerhard
(86) International application number: PCT/EP2015/080825
(87) International publication number: WO 2016/102486

(56) References cited:
- DE-A1- 2 051 525
- DE-A1- 2 646 904
- DE-U1- 20 218 776
- DE-U1-202005 002 900
- FR-A- 1 371 209
- US-A- 3 541 645
- US-A- 5 451 151

## Description

### DETAILED DESCRIPTION

### State of the art

Sintered expanded polystyrene (https://en.wikipedia.org/wiki/Sintering), also commonly referred to as expanded polystyrene (https://en.wikipedia.org/wiki/Polystyrene), is a thermoplastic resin derived from benzene, with lightness, isothermia, waterproof, dimensional stability, rigidity and resistance to knocks, self-extinguishing and non-toxic characteristics.

As regards lightness, EPS has low volume mass or density [from 10 to 60 kg/m3].

As regards isothermia, it is one of the main characteristics of EPS and it is facilitated by the fact that it is 90% formed by air. This air is enclosed in cells so small to prevent the convective motions. Thus, heat transmission may occur solely by conduction, very low in the air, and by radiation, which rapidly reduces upon the multiplication of the screens made up by the walls of the cells. Remaining balanced with respect to the external air, the internal air stabilises heat conductivity over time.

As regards waterproof features and, on the contrary, permeability to water vapour, EPS is not a hygroscopic material, thus products made of EPS do not reveal inhibition phenomena by capillarity. Thus, EPS' right value of permeability to vapour allows the transpiration of the products obtained therewith, thus not vulnerable to mould and the like.

As regards dimensional stability, EPS is isotropic, given that the products obtained therewith are not subjected to tensioning, with ensuing deformation and breakage, regardless of the time of utilisation thereof; actually, there is a physical-mechanical state of balance with homogeneity of characteristics reproduced in all points of the product. Such characteristic is mainly influenced by the type of expansion the material cells are made of. As a matter of fact, the cell structures that expand as a whole within the space of a few millimetres of diameter are extremely regular, with almost identical micro-spheres.

As regards rigidity and reaction to mechanical stresses, the relation between stresses and deformations is linear up to 3% of deformation. Beyond this limit there is a permanent deformation of the cell structure without breakage.

As regards self-extinguishing characteristics, EPS reveals delayed flame propagation characteristics. The products tested as regards reaction to fire have resistance values solely inferior to those made of incombustible material.

As concerns non-toxicity and biological tolerance, EPS is not toxic, it does not represent a source of nutrition for any living being, micro-organisms included; EPS does not rot, it is not attacked by mould and it is completely recyclable, biologically neutral, neutral to odour and neutral to contact with skin.

As regards production technology, expanded polystyrene should be subjected to a series of transformation processes directly related to the intended use thereof before being used.

At the beginning, the material is in form of fine beads, from one to three millimetres of diameter, added with an expanding agent; the production of semi-finished products and polystyrene - expanded polystyrene - products occurs in three main stages.

Pre-expansion: the expandable polystyrene beads are pre-expanded, generally by means of vapour at a temperature exceeding 90°C, in the so-called pre-expander. In the pre-expansion treated with vapour, the raw material softens and the expanding agent evaporates, causing the swelling of the beads. Following the evaporation of the expanding agent, the beads amplify up to sixty times their initial volume. The duration and intensity of this first operation determine the volume mass of the finished product. A closed cell structure, fundamental for the subsequent use as heat insulator, is formed in this process in the expanded polystyrene beads. The degree of expansion, which essentially depends on the duration of heat treatment in the pre-expander, determines the apparent volume mass of the products made of expanded polystyrene and thus all their physical characteristics.

Maturation of the pre-expanded product: At this stage, the polystyrene beads are stationed for a given period of time in aerated silos. Upon cooling, the expanding material and water vapour residues condensate in the single cells. The vacuum thus formed is nullified by the air which spreads in the cells; thus, the pre-expanded polystyrene or expanded polystyrene beads reach the stability required for the subsequent steps.

Modelling the product: pre-expanded and stabilised polystyrene beads may thus be transformed into products or semi-finished products in various ways.

As regards moulding blocks and cutting polystyrene or sintered expanded polystyrene slabs; it is the most used system (see e.g. DE 10 2011 107 964 B4, US 3 674 387). The block-making device, constituted by a parallelepiped-shaped element provided with micro-holes for the inlet of vapour on all sides, is filled with polystyrene or expanded polystyrene beads and subjected to a new injection of the saturated vapour; temperatures between 110 - 120°C are attained at this stage; the beads swell further and join each other due to their internal pressure, i.e. they are sintered. The more the EPS has high density, the more the block is subjected to pressure such to facilitate a better sintering. After a brief cooling period, the blocks are extracted and preferably stored for a variable period of time ranging from a few days to two months, a period during which they reach the stability required for the various applications. From here, the expanded polystyrene blocks are picked up for cutting into panels, which occurs with hot wire cutting lines and other possible mechanical operations, such as shaping using numeric control pantographs or by milling.

For moulding panels or other expanded polystyrene products: The production process is the same described for the production of blocks but the EPS panels are moulded singularly in special numeric control automatic machines. This leads to the advantage of directly obtaining the desired shape, without further mechanical machining processes, and sintered beads even in this case; in the EPS, good sintering, i.e. the "bonding" of the beads to each other is very important, actually it is crucial. The more the EPS has high density, the more the block is subjected to pressure such to facilitate a better sintering.

For extrusion-drawing: subsequently to polymerisation, polystyrene or expanded polystyrene is joined to the expanding agent and other possible additives in a drawing machine, which mixes the ingredients in molten state and extrudes the mixture from a die, usually in form of a flat panel, which immediately sinters and expands and stiffens in the expanded form as it cools.

Such characteristics of sintered expanded polystyrene, referred to as EPS, also referred to as expanded polystyrene, find concrete application in the manufacture of building materials, for example according to the technologies described and claimed in WO 215/140018 having the title "Prefabricated building product structure made of sintered expanded polystyrene and method for the relative production", published 24.09.15.

The method in question provides for the moulding of the composite construction assembly, by aggregating an armour preferably made of steel to the sintered expanded polymeric mass, still preferably of the high density type from 30 to 60 kg/m³, by embedding rod-like steel elements therein, preferably preassembled to constitute a mesh or cage of electrowelded elements, still dimensioned and shaped as a function of the shape of the product and/or assembly needs and/or assembly and joining application means; arranging such steel rod-like elements in the polystyrene expansion mould; pouring - into the mould - incoherent granules or beads obtained from the polymerisation of styrene, with suitable grain size and volume to attain a high density finished product (from 30 to 60 kg/m³); expansion and sintering i.e. grouping incoherent polystyrene through contact with water vapour and temperature exceeding ninety degrees injected into the mould and the ensuing entrapment of the reinforcement in the monolithic mass thus attained to obtain a solid geometry, defined by the mould, of polystyrene or reinforced sintered expanded polystyrene.

### Objects of the invention

In this context, the main object of the present invention is to provide, starting from DE 26 46 904 a mould system for expanding and sintering polystyrene particularly adapted to implement the method for producing large reinforced sintered expanded polystyrene panels especially for building purposes, according to which the modules are guided through a molding unit prior to which they may be loaded with reinforcements whereas the unloading operation may be effected behind said unit without the need to open or close a covering shell.

Another object of the present is to attain the preceding object through a suitably large structure for producing the prefabricated building panels made of reinforced sintered expanded polystyrene in a single piece, but simultaneously suitably modularly adapted to produce, within the maximum perimeter defined thereby, substantially any conformation and shape of a reinforced polystyrene panel and accessorised with incorporated elements embedded in the sintered polystyrene mass exclusively where required by the specific needs.

Still another object of the present invention is to attain any one of the preceding objects through an incrementable modular structure with reference to the dimensions, both in terms of expansion and thickness, of the panels that can be produced therewith.

A further object of the present invention is to attain any one of the preceding objects through a structure that allows the easiest loading possible of the articulated and voluminous reinforcing means intended to be incorporated in the sintered polystyrene mass and equally relatively easy unloading and removal of the finished product.

A further object of the present invention is to attain any one of the preceding objects through a structure the most productive, simple and quick possible in the variation of the formats of the products, with the due proportions with respect to the size and complexity of the products in question.

A further object of the present invention is to attain any one of the preceding objects through a device that is simple and functional, safe to use and relatively inexpensive considering the actual results attained therewith.

### Summary of the solution concept

These and other objects are attained with the modular moulding structure set forth in the claims.

### Description of the attached drawings

Further characteristics and advantages of the modular mould structure for expanding and sintering polystyrene according to the present invention shall be more apparent from the following detailed description of a preferred but non-exclusive embodiment thereof, represented solely by way of non-limiting example with reference to the four attached drawings, wherein:
Figure 1 illustrates an elevational view of an embodiment of a modular mould for expanding and sintering polystyrene according to the present invention;
Figures 2 to 4 respectively illustrate, in lateral view, an embodiment of a modular mould for expanding and sintering polystyrene according to the present invention, in an equivalent number of operative configurations of the relative components;
Figure 5 illustrates a plan view of an embodiment of a modular mould for expanding and sintering polystyrene according to the present invention;
Figures 6 to 8 respectively illustrate a perspective top view of an embodiment of a modular mould for expanding and sintering polystyrene according to the present invention, in an equivalent number of operative configurations of the relative components;
Figures 9 to 11 respectively illustrate a perspective top view of an embodiment of a modular mould for expanding and sintering polystyrene according to the present invention, in an equivalent number of operative configurations of the relative components;

### Static description of a preferred embodiment

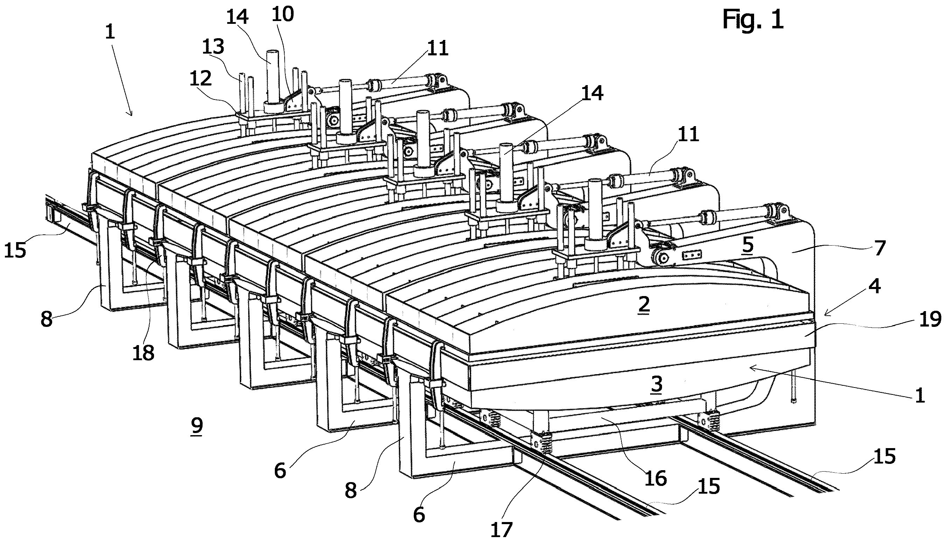

With reference to such figures, in particular figure 1, a plurality of identical sintering modules or adjacent twinned moulding units are indicated in their entirety with 1.

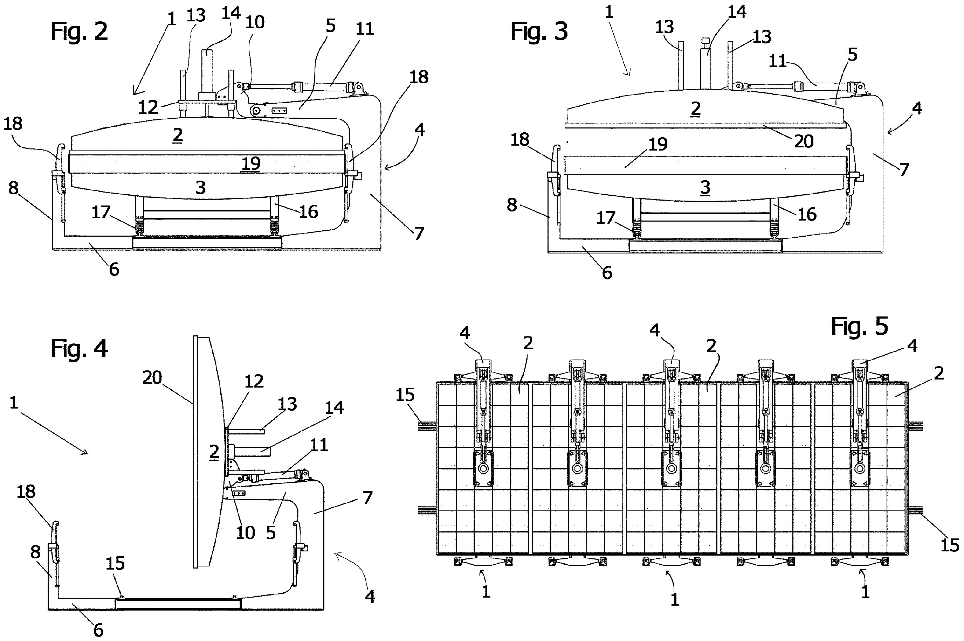

Each moulding unit 1 (also see figures 2, 3 and 4) is constituted by a lower shell 3 or mould and by an upper shell 2 or counter-mould, associated by a fixed truss element 4, comprising a base truss portion 6 extending on the ground 9 under the lower shell 3 and a raised truss portion 5 projecting over the upper shell 2 joined by a rear raised truss portion 7; said truss element 4 being completed by a front raised truss segment 8.

The raised truss portion 5 projects over the upper shell 2 through an arm indicated with the same reference number 5, to which there is apically fulcrumed a lever 10 actuated by a pneumatic cylinder 11 and associated to the resistance with a rectangular plate 12.

The rectangular plate 12 is suspended centrally over the upper shell 2, slidably associated thereto by means of four pins 13 passing therethrough on the four angles and by means of a central pneumatic cylinder 14.

The base truss portion 6, resting on the ground 9, supports the lower shell 3 or mould through a pair of tracks 15, which traverse all the trusses 4 of all adjacent twinned moulding units 1, still extending on two sides of the assembly of the adjacent twinned moulding units 1 of a linear dimension at least equivalent to the linear overall dimension of the assembly of the adjacent twinned moulding units 1.

Each lower shell 3 is mounted on a chassis 16 which slides on said tracks 15 through two pairs of wheels 17, so that all the lower shells 3 can be displaced from the laying position to the respective upper shells 2 in a block, on one side or the other of the assembly of the upper shells 2, respectively supported adjacent by the raised portions 5 of the fixed trusses 4.

Each truss element 4 is provided, on the sides of the rear raised truss portion 7 and on the sides of the front raised truss segment 8, by pairs of fastening elements 18, adapted to mutually fasten the respective lower shells 3 or moulds and upper shells 2 or counter-moulds.

The displacement of all lower shells 3 in a block is actuated through driving means of the known type, not illustrated, which can be conceived both on board of the self-propelled assembly as well as on the ground; the moulds 1, and the relative modules 1 they are constituted of, shall be considered provided with vapour supply ducts and diffusers, not illustrated, of the known type, as well as polystyrene spherules conveyors and diffusers, not illustrated, of the known type, preferably connected to differentiated suppliers for localised co-sintering of different densities of polystyrene.

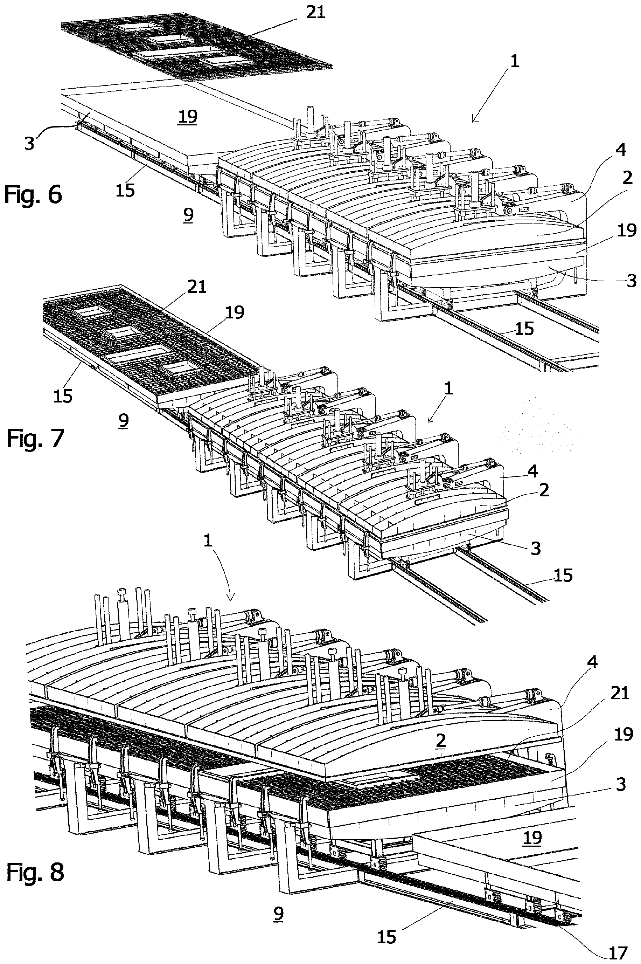

In figures 6 to 11, the assembly of the sintering modules 1 or moulding units 1 is represented in its various operative configurations, better illustrated in the subsequent chapter dedicated to the dynamic description of the preferred embodiment; in such figures, the assemblies of the upper shells 2 or moulds and lower shells 3 or counter-moulds are indicated with the same reference numbers as the relative units.

In figures 6 to 11, above the assemblies of the lower shells 3 there is illustrated a moulding matrix 19 joining the matrices of the lower shells 3, whose surface shall be deemed perforated in a suitable and known manner for the permeation of the sintering vapour.

Likewise, beneath the assembly of the upper shells 2 there is illustrated a counter-mould plane 20 joining all the counter-mould surfaces of the upper shells 2, which shall also be deemed perforated in a suitable and known manner for the permeation of the sintering vapour.

In said figures 6 to 11, the means for reinforcing panels are indicated with 21 and the finished reinforced panels are indicated with 22, for the functions described hereinafter.

### Dynamic description of the preferred embodiment

Thus, having completed the static description of a preferred embodiment of the modular mould structure for expanding and sintering polystyrene obtained according to the present invention, below is the dynamic description:
For this purpose, main reference is made to the object of the invention which is that of obtaining the sintering of reinforced polystyrene panels with the common denominator of having considerable dimensions, but differentiated by the shape, accessorisation and dimensions thereof, for obtaining self-referential building prefabricated products for building innovative constructions exclusively obtained using high density sintered reinforced polystyrene panels.

In this context, the modular moulding structure according to the present invention allows, by providing a suitable plurality of sintering modules 1, or adjacent twinned moulding units 1, as well as, where necessary, by increasing the number, moulding high density sintered reinforcement panels 22, substantially of any dimension, shape accessorisation, that may be required by the contingent construction design and technique.

The production management of the products of such large dimensions is allowed by the transferability as well as the modularity of the moulds:
as regards transferability, the assembly of the lower shells 3, carrying the moulding matrices 19, is actually slidable on the tracks 15, outside the overall dimension of the upper shells 2 or counter-moulds 20, preferably on two sides of the assembly of the upper shells 2, so that the reinforcements 21 of the panels 22 can be easily loaded from above on the matrices 19, carried to be kept in the "open air", using pulleys, lifts, forklifts and the like.

As regards modularity, the moulding matrices 19 can also be adapted to any dimension, configuration, shape and accessorisation of the panel 22 to be obtained in the relative perimeter, this also being increasable with other modules 1 where necessary, both due to the dimensional and configuration interchangeability, or the change of the mould at will, as well as the positioning of the occluding, partitioning and constraint elements against overflow of the pouring and the ensuing sintering of the spherules, or adaptation to the mould; the entirety in synergically combined association with the modulable activation of the moulding units 1 or moulding modules 1.

Thus, the operating capacity of the machine for loading the reinforcement 21 onto the matrix 19 carried by the lower shells 2 and the relative arrangement thereon, alongside other elements intended to be incorporated to the panel 22, as well as the elements for hindering the spilling of the spherules and the relative sintering, where it is deemed suitable to provide an opening or hole in the finished product, for example at the door or window openings of reinforced panels 22.

Thus, the assembly of the lower shells 2 translates on the tracks 15 up to beneath the assembly of the upper shells 3, joined at the lower part by the counter-mould surface 20, if projecting.

When the symmetricity of the assemblies is complete, i.e. when each lower shell 3 reaches the exact position of the upper shell 2 with which it cooperates to form the single moulding module 1, the suitably set computerised module, which controls the machine in all the functions thereof, controls the upper shells 3 to descend through the plates 12 guided by the four pins 13 and actuated by the cylinders 14 at the apex of the upper arms 5 of the truss 4; the excursion may vary as a function of the height of the mould, thus there can be produced panels substantially of any thickness within the range of usual thicknesses of the specific product.

Upon closing the moulding matrix 19 through the counter-mould 20, the assembly is fastened through fastening elements 18 and flows of polystyrene spherules for are supplied thereinto, still with the suitably programmed computerised logic, according to an amount and arrangement suitable for the specific panel to be constructed, and thus water vapour flows that cause the expansion and sintering of the polystyrene mass are supplied.

At the end, the moulding matrix 19 is opened and the assembly of the lower shells 3 may translate on the other side of the assembly of the upper shells 2, so as to load the reinforcement panel 22 thus finished thereon in the "open air".

In another embodiment, there may be provided two assemblies of lower shells 3, which are alternatively subjected to the assembly of the upper shells 2 and then receded to the respective positions for loading the reinforcement and unloading the finished reinforced product.

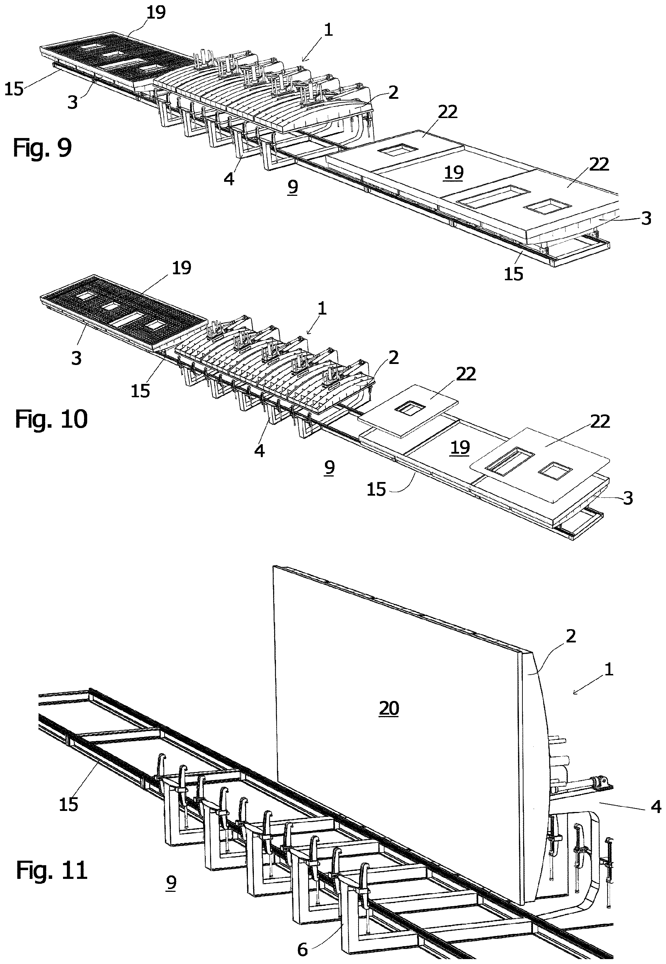

Figure 11 shows the assembly of the upper shells 2 in a front rotated position thereof, allowed by the absence of the assembly of the lower shells 3 contingently translated on the tracks 15, by rotating the apical levers 10 of each upper arm 5 of the truss 4, so as to allow the inspection, cleaning and replacement of the counter-mould surface 20.

### Alternative embodiments

It is obvious that in alternative embodiments, still falling within the concept solution of the implementation example illustrated above and claimed below, the modular mould structure for expanding and sintering polystyrene according to the present invention, may also be implemented and obtained differently, through equivalent technical and mechanical solutions still falling within the scope of protection illustrated and claimed below;

In particular:
The truss of the modules, and the structuring of functionally similar support means, may be conceived in a manner such to be displaced in a direction perpendicular to the extension of the tracks, according to the illustrated example, so as to move away therefrom; this receding apart movement also leads to the recession of the supported upper shell, so as to allow the rotation thereof even in the absence of translation of the assembly of the lower shells. An alternative embodiment thus obtained, still falling within the solution concept claimed below, shows that there can also be actuated, possibly with the aim of reducing the containment spaces, a machine - though less productive - in which the assembly of the lower shells is not displaced for loading the reinforcement from the top and unloading the finished product but in the "open air" above the assembly of the lower shells is attained by moving the assembly of the upper shells away by receding it.

The truss, for example conceived as a single shaped longitudinal beam in the illustrated embodiment, though such embodiment is deemed preferable in that it is the one most capable of reducing overall dimensions and interferences for economic purposes or other purposes, may be alternatively conceived as framework reticulum, possibly resting against the ground even on the front side of the machine, variously shaped, structured or composed to support the arrangement of the movement of the aerial components of the machine.

The tracks may obviously be replaced by any other guiding means suitable for the purpose.

The shape and structuring of the shells and moulding means carried thereby may be of any type, dimension and shape suitable for the purpose.

In addition, as previously mentioned in a description part, the means for driving the block of lower shells, not illustrated in the described embodiment, may be implemented in any known manner suitable for the purpose.

### Advantages of the invention

As observable from the detailed description of preferred but non-exclusive embodiments above, the modular mould structure for expanding and sintering polystyrene according to the present invention, offers advantages corresponding to the attainment of the preset objects, to which reference shall be made to identify these and other advantages:
It allows the moulding of large sintered reinforcement polystyrene panels designated for building purposes in terms of polyvalent modular elements as a function of different dimensions and shapes as well as providing accessories and thicknesses required by the finished products, particularly for combining to form the elements constituting buildings exclusively obtained with such prefabricated building techniques.

### KEY TO REFERENCE NUMBERS

1) moulding units or modules
2) upper shells
3) lower shells
4) trusses
5) raised truss portions or upper truss arm
6) base truss portions
7) rear raised truss portions
8) front raised truss segments
9) ground
10) upper shells angular rotation levers
11) pneumatic cylinders for actuating the upper shells angular rotation levers
12) rectangular plates for slidably axially supporting the upper shells
13) guide pins for the axial excursion of the upper shells
14) pneumatic cylinders for actuating the axial excursion of the upper shells
15) tracks
16) lower shells chassis or framework
17) lower shells wheels
18) fastening elements for the mutual fastening of upper and lower shells
19) combined moulding matrix of the lower shells
20) combined counter-mould surface of the upper shells
21) panel reinforcements
22) reinforced panels

## Claims

1. Mould structure suitable for expanding and sintering polystyrene, particularly for the creation of prefabricated panels used in the building industry, made of reinforced sintered expanded polystyrene, constituted by a composite assembly through the aggregation of reinforcement structures to the sintered expanded polymeric mass by embedding preassembled elements, preferably rod-like steel elements to constitute a cage of electrowelded elements, therein before sintering, the mould structure comprising a plurality of twinned sintering modules (1) or adjacent twin moulding units (1), each constituted by an upper shell (2) and a lower shell (3) associated by support means (4) adapted to keep them superimposed and having a raised portion (5) which supports the upper shell (2) through linear elevation movement means (12, 13, 14) and angular rotation movement means (10, 11), while the support means (4) further comprises a base portion (6) supporting the lower shell (3), **characterised in that** said base portion (6) of said support means (4) supports the lower shell (3) through means for sliding (17) and guiding (15) on the ground (9), shared by all adjacent twin moulding units (1), so that the lower shells (3) may be displaced as a block (3) at least on one side of the assembly of the upper shells (2) to be loaded on one side with the reinforcement means (21) intended to be embedded in the panels (22) and be unloaded on the other side of the finished reinforced panels (22).

2. Mould structure according claim 1, wherein, the upper shell (2) and the lower shell (3) are associated by a truss element (4), possibly displaceable, of the base (6) and elevated (5) type, wherein the raised truss (4) portion (5) supports the upper shell (2) through linear elevation movement means (12, 13, 14) and angular rotation movement means (10, 11), while the base portion (6) of the truss (4) supports the lower shell (3) through said means for sliding (17) and guiding (15) on the ground (9), shared by all the adjacent twin moulding units (1), so that the lower shells (3) may be displaced as a block (3) at least on one side and preferably on two sides of the assembly (2) of the upper shells (2), for so as to be displaced preferably loaded on one side with the reinforcement means (21) intended to be embedded in the panels (22) and be preferably unloaded on the other side of the finished reinforced panels (22).

3. Mould structure according to claim 1 or 2, wherein
the raised truss portion (5) projects over the upper shell (2) through an arm (5) to which there is pivoted a lever (10) actuated by a linear actuation means (11) and associated to a plate (12) suspended over the upper shell or counter-mould (2) and slidingly associated to the latter through retention and guide means (13) and through a linear implementation means (14);
the truss (4) base portion (6) closest to the ground (9) supports the lower shell or mould (3) through guide means (15) which traverse all trusses (4) of all the adjacent twinned moulding units (1), still extending on at least one of the two sides of the assembly of the adjacent twin moulding units (1) with a linear dimension at least equivalent to the overall linear dimension of the assembly of the twin adjacent moulding units (1);
every lower shell or mould (3) is mounted on support means (16) moveable on said guide means (15) through rolling or sliding means (17), so that all the lower shells or moulds (3) can be displaced as a block from the laying position to the respective upper shells or counter-moulds (2) at least on one side or on one side and on the other of the assembly of the upper shells or counter-moulds (2) respectively supported adjacent by the raised portions (5) of the fixed trusses (4).

4. Mould structure according to any one of the preceding claims **characterised in that** above the assembly of the lower shells or moulds (3) there is arranged a moulding matrix (19) joining all the matrices (19) of the lower shells or moulds (3).

5. Mould structure according to any one of the preceding claims **characterised in that** beneath the assembly of the upper shells or counter-moulds (2) there is arranged a counter-mould plane (20) joining all the counter-mould planes (20) of the upper shells or counter-moulds (2).

6. Mould structure according to any one of the preceding claims **characterised in that:**
- the twinned sintering modules (1) or twin moulding units (1) and hence the lower shells or moulds (3) and the upper shells or counter-moulds (2) are provided with supply pipes and vapour diffusers as well as well as elements for conveying and diffusing polystyrene beads preferably connected to differentiated suppliers for the localised co-sintering of various density of polystyrene;
- the single and combined moulding matrices (19) of the lower shells or moulds (3) and the single and combined counter-moulding planes (2) are suitably perforated for the permeation of the sintering vapour.

7. Mould structure according to any one of the preceding claims **characterised in that** the support means (4) of the lower shells or moulds (3) and the upper shells or counter-moulds (2) are provided with fastening elements (18) adapted to mutually fasten the respective lower shells or moulds (3) and upper shells or counter-moulds (2).

## Patentansprüche

1. Pressformvorrichtung, geeignet für die Expansion und Sinterung von Polystyrol, insbesondere zur Herstellung von vorgefertigten Platten für die Bauindustrie aus armiertem, gesintertem und expandiertem Polystyrol, bestehend aus einem Verbundaufbau durch die Aggregation von Armierungen mit einer gesinterten, expandierten Polymermasse unter Einschluss vormontierter Elemente, vorzugsweise stangenförmiger Stahlelemente, die vor der Sinterung ein Gerippe elektroverschweißter Elemente bilden, wobei die Pressformvorrichtung eine Mehrzahl von Zwillings-Sintermodulen (1) oder nebeneinanderliegender Zwillingsformeinheiten (1) aufweist, von denen jede aus einer oberen Gehäuseschale (2) und einer unteren Gehäuseschale (3) besteht, die durch ein Tragorgan (4) miteinander verbunden sind, das dazu dient, diese übereinanderliegend zu halten und das einen obenliegenden Teil (5) hat, der die obere Gehäuseschale (2) über Mittel (12, 13, 14) für eine lineare Hubbewegung und Mittel (10, 11) für Winkeldrehbewegungen hält, wobei das Tragorgan (4) weiterhin einen Basisabschnitt (6) hat, der die untere Gehäuseschale (3) abstützt, **dadurch gekennzeichnet, dass** der Basisabschnitt (6) des Tragorgans (4) die untere Gehäuseschale (3) über Laufmittel (17) und Führungsmittel (15) am Boden (9) abstützt, die allen benachbarten Zwillingsformeinheiten (1) zugeordnet sind, so dass die unteren Gehäuseschalen (3) als Block (3) auf wenigstens einer Seite der durch die oberen Gehäuseschalen (2) gebildeten Einheit verfahren werden kann, die auf einer Seite mit den Armierungen (21) bestückt werden, um in die Platten (22) einzutauchen, und von denen auf der anderen Seite die fertiggestellten armierten Platten (22) abgenommen werden.

2. Pressformvorrichtung nach Anspruch 1, **dadurch gekennzeichnet, dass** die obere Gehäuseschale (2) und die untere Gehäuseschale (3) über ein vorzugsweise verschiebbares, aufrechtes Tragorgan (4) des Basisabschnittes (6) miteinander verbunden sind, dessen oberer Teil (5) die obere Gehäuseschale (2) durch Mittel (12, 13, 14) für die lineare Hubbewegung und über Mittel (10, 11) für Winkeldrehbewegungen hält, während der Basisabschnitt (6) des Tragorgans (4) die untere Gehäuseschale (3) über die genannten Laufmittel (17) und Führungsmittel (15) am Boden (9) hält, die allen benachbarten Zwillingsformeinheiten (1) gemeinsam sind, so dass die unteren Gehäuseschalen (3) als Block (3) auf wenigstens einer Seite, vorzugsweise auf beiden Seiten der Einheit (2) der oberen Gehäuseschalen (2) verfahren werden kann, so dass auf einer Seite eine Bestückung mit den Armierungen (21) erfolgt, die in die Platten (22) eintauchen und vorzugsweise auf der anderen Seite die fertiggestellten armierten Platten (22) abgenommen werden können.

3. Pressformvorrichtung nach Anspruch 1 oder 2, **dadurch gekennzeichnet, dass**
- der obenliegende Teil (5) des Tragorgans (4) über die obere Gehäuseschale (2) mit einem Arm (5) ragt, an dem ein Hebel (10) angelenkt ist, der durch ein lineares Verstellelement (11) betätigt wird und mit einer Platte (12) verbunden ist, die über der oberen Gehäuseschale (2) bzw. dem Gegengesenk aufgehängt und mit diesem durch Führungselemente (13) und ein lineares Betätigungselement (14) verbunden ist,
- der Basisabschnitt (6) des in der Nähe des Bodens (9) liegenden Tragorgans (4) die untere Gehäuseschale (3) auf Führungsmitteln (15) trägt, die alle Tragorgane (4) aller nebeneinanderliegenden Zwillingsmodule (1) durchquert und sich noch über wenigstens eine der zwei Seiten der Einheit nebeneinander liegender Zwillingsmodule (1) mit einer linearen Ausdehnung erstrecken, die wenigstens gleich der linearen Gesamtabmessung der Einheit der nebeneinanderliegenden Zwillingsmodule (1) entspricht,
- jede untere Gehäuseschale (3) auf Lagerorganen (16) angebracht ist, die auf den Führungsmitteln (15) durch Roll- oder Laufmittel (17) beweglich gelagert ist, so dass alle unteren Gehäuseschalen (3) oder Gesenke als Block aus einer Position unter der entsprechenden oberen Gehäuseschale (2) auf wenigstens einer der beiden Seiten oder auf beiden Seiten der Zwillingsmodule (1) verfahrbar sind, die durch die obenliegenden Teile (5) der festen Tragorgane (4) gehalten werden.

4. Pressformvorrichtung nach einem der vorhergehenden Ansprüche, **dadurch gekennzeichnet, dass** über der Einheit der unteren Gehäuseschalen (3) oder Gesenke eine Formmatrix (19) angeordnet ist, die alle Matrizen der unteren Gehäuseschalen (3) miteinander verbindet.

5. Pressformvorrichtung nach einem der vorhergehenden Ansprüche, **dadurch gekennzeichnet, dass** unter der Einheit der oberen Gehäuseschalen (2) eine Gegengesenkebene (20) angeordnet ist, die alle Gegengesenkebenen (20) der oberen Gehäuseschalen (2) miteinander verbindet.

6. Pressformvorrichtung nach einem der vorhergehenden Ansprüche, **dadurch gekennzeichnet, dass**
- die Zwillingssintermodule (1) oder die Zwillingsformeinheiten (1) und damit die unteren Gehäuseschalen (3) und die oberen Gehäuseschalen (2) mit Versorgungsrohren und Dampfdiffusoren sowie mit Mitteln für die Zufuhr und Diffundierung von Polystyrolgranulat versehen sind, die vorzugsweise an unterschiedliche Zufuhrelemente für die lokalisierte Sinterung von Polystyrol unterschiedlicher Dichte angeschlossen sind,
- jede einzelne Matrix (19) oder alle miteinander kombinierten Matrizen der unteren Gehäuseschalen (2) für die Permeation des Sinterungsdampfes gelocht sind.

7. Pressformvorrichtung nach einem der vorhergehenden Ansprüche, **dadurch gekennzeichnet, dass** die Tragorgane (4) der oberen und der unteren Gehäuseschalen (2, 3) Befestigungselemente (18) haben, die zur gegenseitigen Verbindung der unteren und oberen Gehäuseschalen (3, 2) dienen.

## Revendications

1. Structure de moulage sous pression apte à l'expansion et au frittage du polystyrène, en particulier pour la réalisation de panneaux préfabriqués pour l'industrie du bâtiment en polystyrène armé fritté et expansé formant une construction composite d'agrégat d'armature et de matériau polymère expansé et fritté et d'éléments prémontés de préférence en tiges d'acier, lesdits éléments formant avant le frittage une carcasse d'éléments soudés à l'arc, ladite structure de moulage comprenant plusieurs modules frittés jumeaux (1) ou unités jumelles (1) voisines chacun étant constitué par une matrice supérieure (2) et une matrice inférieure (3) réliées par un organe de support (4) apte à les maintenir l'une au-dessus de l'autre et possédant un élément porteur supérieur (5) avec des moyens (12, 13, 14) pour un mouvement linéaire d'élévation et des moyens (10, 11) pour des mouvements de rotation, l'organe de support (4) possédant en outre une section de base (6) sur laquelle repose la matrice inférieure (3), **caractérisée par le fait que** ladite section de base (6) de l'organe de support (4) présente des moyens de translation (17) et des moyens de guidage (15) sur le sol (9), lesdits moyens étant associés à toutes les unités jumelles voisines (1) de sorte que les matrices inférieures (3) soient aptes à être déplacées ensemble sur au moins une extrémité de l'unité formée par les modules supérieurs (2), les modules inférieurs recevant sur une extrémité les armatures (21) venant tremper dans la masse des panneaux (22) lesdits panneaux armés étant prélevés à l'autre extrémité.

2. Structure de moulage selon la revendication 1 **caractérisée par le fait que** le module supérieur (2) et le module inférieur (3) sont réunis par un organe de support (4) debout et de préférence apte à être déplacé et dont la partie supérieure (5) maintient le module supérieur (2) par les moyens (12, 13, 14) pour un mouvement linéaire d'élévation et par les moyens (10, 11) pour des mouvements de rotation, tandis que la section (6) de l'organe de support (4) porte le module inférieur (3) par les moyens de translation (17) et les moyens de guidage (15) sur le sol (9), ces moyens étant communs à toutes les unités jumelles voisines (1) de sorte que le module inférieur (3) peut être translaté en tant que bloc sur au moins une extrémité, de préférence sur les deux extrémités de l'unité (2) des modules supérieurs (2), de sorte que sur une extrémité les armatures (21) puissent être placées pour tremper dans la masse du panneau (22) et de sorte que les panneaux armés (22) soient prélevés à l'autre extrémité.

3. Structure de moulage selon la revendication 1 ou 2 **caractérisée par le fait que**
- la partie supérieure (5) de l'organe de support (4) s'étend au dessus de la matrice supérieure (2) par un bras (5) sur lequel est fixé un levier (10) articulé commandé par un élément de réglage linéaire (11) et relié à une plaque (12) suspendue au-dessus de la matrice supérieure (2) ou contre-matrice (2) et relié à ladite matrice (2) au moyen d'éléments de guidage (13) et d'un élément d'actionnement (14),
- la section de base (6) de l'organe de support (4) reposant près du sol (9) porte la matrice inférieure (3) sur des moyens de guidage (15) qui s'étendent à travers tous les organes de support (4) des unités jumelles (19) voisines et au-delà d'au moins une des deux extrémités de l'unité jumelle (1) d'une longueur linéaire correspondant au moins à la dimension linéaire totale des unité voisines (1),
- chaque matrice inférieure (3) est montée sur des organes portants (16) qui reposent de façon mobile sur les moyens de guidage (15) par des moyens de translation (17) de sorte que toutes les matrices inférieures (3) soient aptes à se déplacer en bloc à partir d'une position au-dessous d'une matrice supérieure (2) correspondante vers au moins une extrémité ou vers les deux extrémités des unités jumelles (1) portées par les parties supérieures (5) des organes de support fixe (4).

4. Structure de moulage selon une des revendications précédentes, **caractérisée par le fait qu'** au-dessus de l'unité des matrices inférieures (3) est positionné une matrice de forme (19) pour la jonction de toutes les matrices inférieures (3).

5. Structure de moulage selon une des revendications précédentes, **caractérisée par le fait que** sous l'unité des matrices supérieures (2) est positionné un plan de contre-matrices (20) pour la jonction de tous les plans de contre-matrices (20) de la matrice supérieure (2).

6. Structure de moulage selon une des revendications précédentes, **caractérisée par le fait que**
- les unités jumelles (1) inférieures ou par conséquence les modules inférieurs (3) et les modules supérieurs (2) sont munis de tubes d'alimentation et de diffuseurs à vapeur et en outre de moyens d'alimentation et de diffusion de granulat de polystyrène, qui sont de préférence raccordés à des éléments d'amenée pour le frittage localisé de polystyrène de densités différentes,
- chaque module (19) ou tous les modules combinés l'un à l'autre des matrices inférieures (2) sont perforés pour la perméation de vapeur de frittage.

7. Structure de moulage selon une revendications précédentes, **caractérisée par le fait, que** les organes de support (4) des matrices supérieures et inférieures (2, 3) sont munis d'éléments de fixation (18) pour la jonction des matrices inférieures et supérieures (3, 2).
